# EUROPÄISCHE PATENTSCHRIFT

(11) **EP 3 164 850 B1**
(45) Veröffentlichungstag und Bekanntmachung des Hinweises auf die Patenterteilung: **07.03.2018**
(21) Anmeldenummer: 15727419.2
(22) Anmeldetag: 09.06.2015
(51) Int. Cl.: G06T 7/73, G01C 21/28, G01C 21/36, G08G 1/0967, G06K 9/00

(54) **VERFAHREN ZUM ERMITTELN IN EINEM BACKEND UND BEREITSTELLEN AN EIN FAHRZEUG EINES EINE LANDMARKE BESCHREIBENDEN DATENSATZES ZUR EIGENPOSITIONSBESTIMMUNG DURCH DAS FAHRZEUG**
METHOD FOR ASCERTAINING IN A BACKEND, AND PROVIDING FOR A VEHICLE, A DATA RECORD, DESCRIBING A LANDMARK, FOR THE VEHICLE TO DETERMINE ITS OWN POSITION
PROCÉDÉ DE DÉTERMINATION, DANS UN SYSTÈME PRINCIPAL, ET DE FOURNITURE À UN VÉHICULE, D'UN ENSEMBLE DE DONNÉES DÉCRIVANT UN POINT DE REPÈRE POUR LA DÉTERMINATION DE POSITION PROPRE PAR LE VÉHICULE

(30) Priorität: 02.07.2014 DE 102014212781
(43) Veröffentlichungstag der Anmeldung: 10.05.2017
(73) Patentinhaber: Continental Automotive GmbH, 30165 Hannover (DE)
(72) Erfinder: MEIER, Herbert, 93055 Regensburg (DE); IVANOV, Alexander, 93309 Kelheim (DE)
(86) Internationale Anmeldenummer: PCT/EP2015/062836
(87) Internationale Veröffentlichungsnummer: WO 2016/000919

(56) Entgegenhaltungen:
- DE-A1-102008 043 756
- DE-A1-102010 030 068
- DE-A1-102012 107 886
- LATEGAHN HENNING ET AL: "Urban localization with camera and inertial measurement unit", 2013 IEEE INTELLIGENT VEHICLES SYMPOSIUM (IV), IEEE, 23. Juni 2013 (2013-06-23), Seiten 719-724, XP032501982, ISSN: 1931-0587, DOI: 10.1109/IVS.2013.6629552 [gefunden am 2013-10-10]

## Beschreibung

Die Erfindung betrifft ein Verfahren zum Ermitteln und Bereitstellen einer Landmarke zur Positionsbestimmung für ein Fahrzeug.

Für viele Anwendungen ist es erforderlich, dass die eigene Position in einem Fahrzeug hochgenau bekannt ist. Eine hochgenaue Position bezogen auf befahrbare Spuren wird insbesondere in Fahrzeugen, bei denen in Zukunft hochautomatisiertes Fahren möglich ist, benötigt. Befahrbare Spuren können dabei entweder markierte Spuren oder auch Wege sein, die bereits von anderen Fahrzeugen befahren wurden und deren Fahrweg hochgenau aufgezeichnet wurde.

Zum präzisen Ermitteln einer Position des Fahrzeugs im Fahrzeug selbst können heute Algorithmen für differenzielle Navigation, beispielsweise differenzielles GPS, eingesetzt werden. Des Weiteren können Algorithmen verwendet werden, mit denen Muster von LIDAR-Sensoren zum hochgenauen Ermitteln einer Position ausgewertet werden. Der Einsatz beider Verfahren ist jedoch aufgrund der teuren GPS-Empfänger und LIDAR-Sensoren mit hohen Kosten verbunden.

Eine weitere Möglichkeit zur Bestimmung einer hochgenauen Position im Fahrzeug besteht darin, dass von einem Fahrzeug Landmarken in der Umgebung des Fahrzeugs erkannt werden. Wenn eine jeweilige Position dieser Landmarken bekannt ist und im Fahrzeug vorliegt, kann die Position des Fahrzeugs anhand der Position der in der Umgebung des Fahrzeugs erfassten Landmarke im Fahrzeug hochgenau ermittelt werden. Zur Anwendung eines derartigen Verfahrens ist es erforderlich, dass eine Vielzahl von Landmarken erfasst wird und im Fahrzeug zur Auswertung zur Verfügung steht.

Aus LATEGAHN HENNING ET AL: "Urban localization with camera and inertial measurement unit", 2013 IEEE INTELLIGENT VEHICLES SYMPOSIUM (IV), IEEE, 23. Juni 2013 (2013-06-23), Seiten 719-724, XP032501982, ISSN: 1931-0587, DOI: 10.1109 /IVS.2013.6629552, ist ein Lokalisationssystem mit on-board Landmarkenerkennung zur Ermittlung einer Egoposition eines Fahrzeugs bekannt. Weiterhin wird dort angedeutet, dass das System durch fahrzeugrelevante Landmarken erweitert werden soll und dass die entsprechenden Merkmale dazu schon offline vorhanden sein sollen.

Die veröffentlichten Patentanmeldungen DE 10 2012 107 886 A1, DE 10 2008 043 756 A1 und DE 10 2010 030 068 A1 offenbaren die Auswertung von Bildern in einem Backend bzw. entfernten Rechenzentrum.

Die Aufgabe der vorliegenden Erfindung ist es, ein Verfahren zum Ermitteln und Bereitstellen einer Landmarke zur Positionsbestimmung für ein Fahrzeug anzugeben, das das Ermitteln der Landmarke mit geringem Aufwand zuverlässig ermöglicht und mit dem die Position der Landmarke hochgenau ermittelt werden kann.

Eine Ausführungsform eines Verfahrens zum Ermitteln und Bereitstellen einer Landmarke zur Positionsbestimmung für ein Fahrzeug ist im Patentanspruch 1 angegeben. Zur Ausführung des Verfahrens wird ein Fahrzeug mit einer Bildaufnahmeeinrichtung zur Aufnahme eines Bildes einer Umgebung des Fahrzeugs, mit einer Bildauswerteeinrichtung zum Auswerten des Bildes und mit einer Positionsbestimmungseinrichtung zum Ermitteln einer Position des Fahrzeugs bereitgestellt. Des Weiteren wird eine Datenverarbeitungsstation mit einer Bildanalyseeinrichtung zur Analyse des Bildes zum Feststellen einer Landmarke in dem Bild bereitgestellt. Mit der Bildaufnahmeeinrichtung wird vom Fahrzeug ein Bild der Umgebung des Fahrzeugs aufgenommen. Eine Position des Fahrzeugs wird am Ort des aufgenommenen Bildes mittels der Positionsbestimmungseinrichtung ermittelt. Mit der Bildauswerteeinrichtung wird das Bild im Fahrzeug ausgewertet.

Das aufgenommene Bild und die ermittelte Position des Fahrzeugs werden von dem Fahrzeug zu der Datenverarbeitungsstation übermittelt, wenn die Bildauswerteeinrichtung mindestens eines der in dem aufgenommenen Bild enthaltenen Objekte als ein statisches Objekt auswertet. Durch die Bildanalyseeinrichtung wird das empfangene Bild analysiert um festzustellen, ob das mindestens eine Objekt als Landmarke geeignet ist. Eine Position des mindestens einen Objekts wird in dem empfangenen Bild durch die Bildanalyseeinrichtung ermittelt, wenn festgestellt worden ist, dass das mindestens eine Objekt als Landmarke geeignet ist. Des Weiteren wird ein das mindestens eine Objekt beschreibender Datensatz durch die Datenverarbeitungsstation erzeugt, wenn festgestellt worden ist, dass das mindestens eine Objekt als Landmarke geeignet ist. Der erzeugte Datensatz wird von der Datenverarbeitungsstation an das Fahrzeug übertragen.

Das Verfahren zum Ermitteln und Bereitstellen einer Landmarke zur Positionsbestimmung für ein Fahrzeug beruht auf einer optimierten Zusammenarbeit zwischen einer Bilderfassung im Fahrzeug mit anschließender Bildauswertung und einer weitergehenden, komplexeren und genaueren Bildanalyse in der Datenverarbeitungsstation (Backend), in der deutlich mehr Rechenleistung als im Fahrzeug zur Verfügung steht. Durch den immer häufigeren Einsatz von Mono- oder Stereokameras, beispielsweise zur Spur- oder Schildererkennung, steht in den meisten Fahrzeugen bereits eine Bildaufnahmeeinrichtung zur Verfügung, die zur Aufnahme eines Bildes sowie zur späteren Identifizierung einer hochgenauen Position verwendet werden kann. Gemäß dem Verfahren wird nicht an jeder Position, an der sich das Fahrzeug befindet, ein Bild aufgenommen und ausgewertet. Stattdessen kann die aktuelle Fahrzeugposition ausgehend von einer hochgenau bestimmten Position mittels der Positionsbestimmungseinrichtung durch Auswerten von Signalen eines Satellitennavigationssystems und/oder durch Auswerten von Signalen der Fahrzeugsensorik für eine weitergehende Wegstrecke bestimmt werden, wobei dabei die Genauigkeit der Positionsbestimmung für die weitergehende Wegstrecke im benötigten Rahmen bleibt.

Das Verfahren berücksichtigt insbesondere, dass die zur Verfügung stehende Bandbreite zur Übertragung von Bildern von dem Fahrzeug zu der Datenverarbeitungsstation limitiert ist und dass in der Datenverarbeitungsstation eine höhere Verarbeitungskapazität zur Verfügung steht. Die Bildauswerteeinrichtung des Fahrzeugs kann anhand der in einem aufgenommenen Bild erkannten Objekte bewerten, wie hoch die Wahrscheinlichkeit ist, dass signifikante Landmarken in dem aufgenommenen Bild enthalten sind. Des Weiteren kann im Fahrzeug bereits abgeschätzt werden, wie häufig Landmarken benötigt werden. Dies ist beispielsweise von der befahrenen Wegstrecke als auch von den bereits verfügbaren Landmarken abhängig. Dadurch kann die Übertragungsrate bei der Übertragung von Daten, insbesondere von Bildern, vom Fahrzeug zu der Datenverarbeitungsstation auf eine niedrige Frequenz, beispielsweise eine Frequenz von kleiner als 1 Hz, reduziert werden. Dadurch können Bilder beispielsweise bei Verfügbarkeit von LTE (Long-Term Evolution Standard) in Echtzeit von einem Fahrzeug zur Datenverarbeitungsstation übertragen werden.

Im Fahrzeug findet durch die Bildauswertung eines aufgenommenen Bildes lediglich eine Vorab-Schätzung statt, ob in dem aufgenommenen Bild statische Objekte vorhanden sind, die möglicherweise als Landmarken geeignet sein könnten. Die eigentliche Bildanalyse zum Feststellen, ob in dem aufgenommenen Bild tatsächlich statische Objekte enthalten sind, die als Landmarken geeignet sind, sowie die Auswahl von einem oder mehreren im Bild enthaltenen Objekten als Landmarken zur Positionsbestimmung erfolgt in der Datenverarbeitungsstation.

Mittels eines Bildverarbeitungsverfahrens, wie es beispielsweise in der Veröffentlichung von Qin Lv, Moses Charikar und Kai Li: "Image Similarity Search With Compact Data Structures", die zum Beispiel unter der Web-Adresse http://www.cs.princeton.edu/courses/archive/spr05/cos598W/bib /p208-lv.pdf zugänglich ist, beschrieben ist, können in der Datenverarbeitungsstation durch geeignete Analyse des von dem Fahrzeug empfangenen Bildes Landmarken und insbesondere Merkmale eines Objekts, das als Landmarke geeignet ist, erstellt werden. Die bei der Bildanalyse in der Datenverarbeitungsstation extrahierten Merkmale können mit Zusatzdaten, beispielsweise Positionsangaben aus dem Fahrzeug, angereichert und in Form eines Datensatzes wieder zurück an das Fahrzeug oder an eine Vielzahl von Fahrzeugen einer Fahrzeugflotte übertragen werden und dort in einer Speichereinrichtung gespeichert werden. Durch das Sammeln von Positionsangaben zu einem Objekt, das als Landmarke geeignet ist, von vielen Fahrzeugen kann die Positionsangabe des Objekts sowie die Beschreibung seiner Merkmale in der Datenverarbeitungsstation weiter verbessert werden.

Mit Hilfe der von der Datenverarbeitungsstation zur Verfügung gestellten Datensätze, die Landmarken und ihre Merkmale angeben, kann im Fahrzeug die Fahrzeugposition ermittelt werden. Dazu kann von der Bildaufnahmeeinrichtung ein Bild des Umfelds des Fahrzeugs aufgenommen werden. Im Bild wird dann in Abhängigkeit von den im Fahrzeug gespeicherten Landmarken, nach Landmarken gesucht, die im Bereich der eigenen, beispielsweise mittels Satellitennavigation und/oder Fahrzeugsensorik, bestimmten Position zu erkennen sein müssten. Die Genauigkeit der mittels Satellitennavigation und/oder Fahrzeugsensorik bestimmten Position des Fahrzeugs kann dann anhand der relativ erkannten Position der Landmarke verbessert werden.

Die Erfindung wird im Folgenden anhand von Figuren, die Ausführungsbeispiele der vorliegenden Erfindung zeigen, näher erläutert. Es zeigen:
- Figur 1: eine Anordnung zum Ermitteln und Bereitstellen einer Landmarke für ein Fahrzeug,
- Figur 2: eine Ausführungsform eines Fahrzeugs und einer Datenverarbeitungsstation zur Ausführung eines Verfahrens zum Ermitteln und Bereitstellen einer Landmarke für das Fahrzeug.

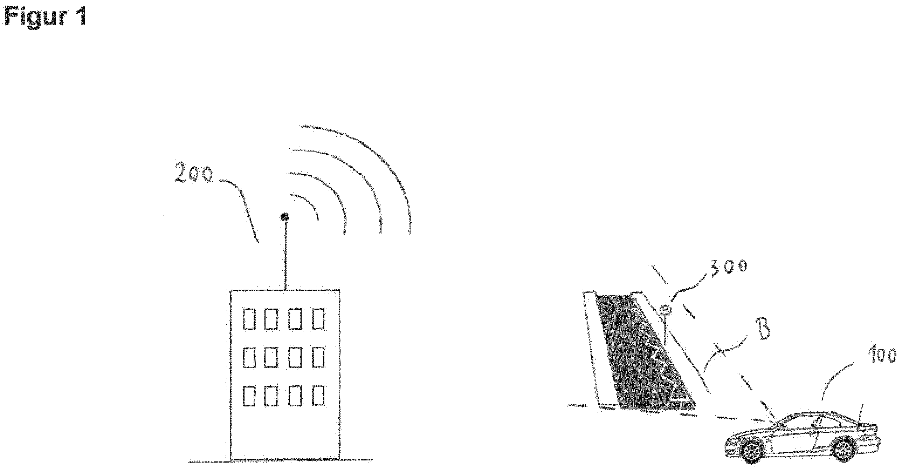

Figur 1 zeigt ein Fahrzeug 100, das beispielsweise zum hochautomatisierten Fahren seine eigene Position hochgenau ermitteln muss. Dazu werden dem Fahrzeug von einer Datenverarbeitungsstation (Backend) 200 eines Diensteanbieters Datensätze zur Verfügung gestellt, die Landmarken in der Umgebung des Fahrzeugs 100 beschreiben. Zum Erstellen der Landmarken werden von einer Bildaufnahmeeinrichtung des Fahrzeugs Bilder B, in denen statische Objekte 300 enthalten sind, aufgenommen und zur weiteren Auswertung an die Datenverarbeitungsstation 200 übertragen.

Durch Bildanalyse mit geeigneten Algorithmen kann von der Datenverarbeitungsstation 200 festgestellt werden, ob ein Objekt 300, das in dem empfangenen Bild B enthalten ist, als Landmarke geeignet ist. Wenn von der Datenverarbeitungsstation 200 festgestellt worden ist, dass ein in dem Bild B enthaltenes statisches Objekt als Landmarke geeignet erscheint, können durch die Bildanalyse die Merkmale des Objekts extrahiert und die Position des Objekts ermittelt werden.

In Abhängigkeit von der ermittelten Position und den extrahierten Merkmalen des als Landmarke geeigneten Objekts wird von der Datenverarbeitungsstation 200 ein Datensatz generiert. Der Datensatz wird von der Datenverarbeitungsstation 200 an das Fahrzeug 100 beziehungsweise an weitere Fahrzeuge einer Fahrzeugflotte übertragen. Wenn von einem Fahrzeug in einem aufgenommenen Bild ein Objekt als Landmarke wiedererkannt wird, kann das Fahrzeug seine Position relativ zu der hochgenau bekannten Position der Landmarke ermitteln.

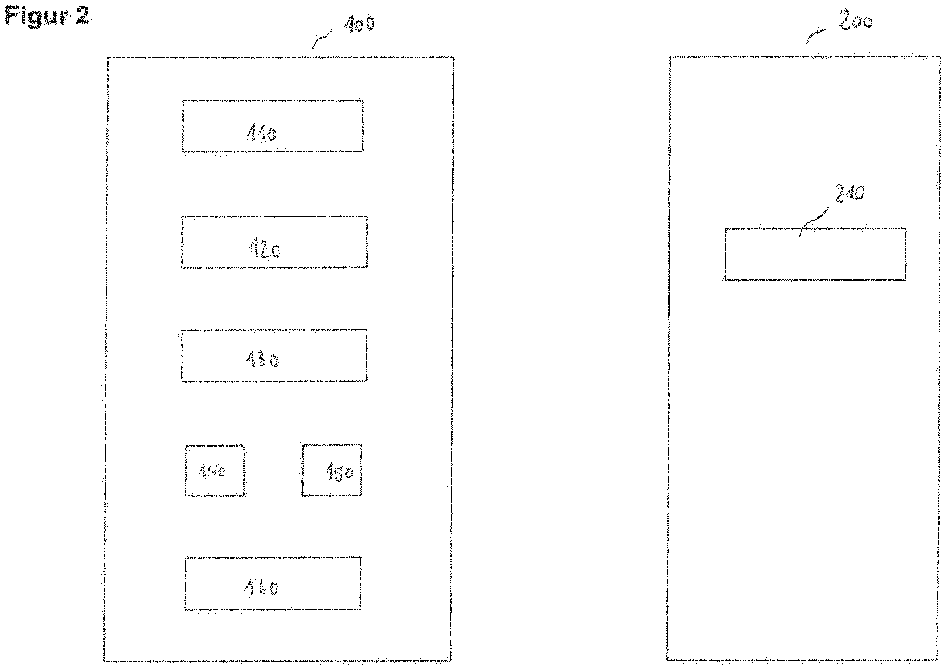

Figur 2 zeigt Komponenten, die im Fahrzeug 100 und in der Datenverarbeitungsstation 200 zur Ausführung eines Verfahrens zum Ermitteln und Bereitstellen einer Landmarke zur Positionsbestimmung für das Fahrzeug vorgesehen sind. Das Fahrzeug 100 umfasst eine Bildaufnahmeeinrichtung 110 zur Aufnahme des Bildes B einer Umgebung des Fahrzeugs, eine Bildauswerteeinrichtung 120 zum Auswerten des Bildes B und eine Positionsbestimmungseinrichtung 130 zum Ermitteln einer Position des Fahrzeugs 100. Die Datenverarbeitungsstation 200 umfasst eine Bildanalyseeinrichtung 210 zur Analyse des Bildes B, um ein in dem Bild B enthaltenes Objekt als Landmarke zu identifizieren.

Im Fahrzeug 100 wird zunächst mit der Bildaufnahmeeinrichtung 110 ein Bild B der Umgebung des Fahrzeugs aufgenommen. Die Bildauswerteeinrichtung 120 wertet das aufgenommene Bild B in Bezug auf das Vorhandensein von statischen Objekten aus, die möglicherweise als Landmarken geeignet sein könnten. Die Bildaufnahmeeinrichtung 110 kann beispielsweise eine Umfeldkamera sein, mit der sich Videosequenzen der Umgebung des Fahrzeugs 100 aufzeichnen lassen, die anschließend mittels Videoanalyse von der Bildauswerteeinrichtung 120 in Bezug auf das Vorhandensein von statischen Objekten analysiert werden.

Mittels der Positionsbestimmungseinrichtung 130 wird des Weiteren eine Position des Fahrzeugs 100 am Ort des aufgenommenen Bildes B ermittelt. Das Fahrzeug 100 kann beispielsweise eine Antenne 140 zum Empfangen von Signalen eines Satellitennavigationssystems und/oder mindestens einen Sensor 150 zum Erfassen einer Fahrdynamik des Fahrzeugs 100 aufweisen. Die Positionsbestimmungseinrichtung 130 kann die Position des Fahrzeugs 100 am Ort des aufgenommenen Bildes B in Abhängigkeit von einem Signal der Antenne 140 und/oder einem Signal des mindestens einen Sensors 150 ermitteln.

Wenn die Bildauswertung im Fahrzeug ergibt, dass das aufgenommene Bild B mindestens ein Objekt 300 enthält, das möglicherweise statisch ist und als Landmarke geeignet sein könnte, wird das Bild B und die von der Positionsbestimmungseinrichtung 120 ermittelte Position des Fahrzeugs von dem Fahrzeug zu der Datenverarbeitungsstation 200 zur weiteren und genaueren Bildanalyse übertragen.

Das übertragene Bild B wird in der Datenverarbeitungsstation 200 von der Bildanalyseeinrichtung 210 analysiert, um festzustellen, ob das in dem Bild B enthaltene vermeintlich statische Objekt, tatsächlich ein statisches Objekt ist, das als Landmarke geeignet ist. Wenn im Rahmen der Bildanalyse in der Datenverarbeitungsstation 200 festgestellt wird, dass das in dem Bild B enthaltene Objekt als Landmarke geeignet ist, wird die Position des Objekts 300 in dem empfangenen Bild B von der Datenverarbeitungsstation 200 ermittelt. Dies kann durch die Bildanalyse in Abhängigkeit von der vom Fahrzeug ermittelten Position, an der das Bild aufgenommen worden ist, erfolgen.

Anschließend wird ein das Objekt 300 beschreibender Datensatz von der Datenverarbeitungsstation 200 erzeugt und an das Fahrzeug 100 übertragen. Der Datensatz enthält insbesondere die von der Datenverarbeitungsstation ermittelte Position des Objekts 300. Der Datensatz kann in dem Fahrzeug 100 beispielsweise in einer Speichereinrichtung 160 gespeichert werden. In der Speichereinrichtung 160 können eine Vielzahl von Datensätzen gespeichert sein, die jeweils ein statisches Objekt, das als Landmarke dient, beschreiben. Beispielsweise kann in der Speichereinrichtung 160 eine digitale Karte gespeichert sein, die die statischen Objekte beziehungsweise Landmarken enthält.

Um festzustellen, ob das Objekt 300, das bereits bei der Bildauswertung im Fahrzeug als möglicherweise statisches Objekt ausgewertet worden ist, tatsächlich ein statisches Objekt ist, werden von der Bildanalyseeinrichtung 210 Merkmale des mindestens einen Objekts in dem empfangenen Bild B extrahiert. Anhand der extrahierten Merkmale kann von der Bildanalyseeinrichtung 210 der Datenverarbeitungsstation 200 festgestellt werden, ob das Objekt 300 tatsächlich ein statisches Objekt ist. Darüber hinaus kann anhand der extrahierten Merkmale des Objekts in der Datenverarbeitungsstation festgestellt werden, ob das statische Objekt als Landmarke geeignet ist.

Der von der Datenverarbeitungsstation 200 erzeugte Datensatz kann die extrahierten Merkmale und die von der Datenverarbeitungsstation ermittelte Position des mindestens einen Objekts 300 enthalten. Somit können von der Datenverarbeitungsstation 200 aktuelle Beschreibungen von Landmarken an das Fahrzeug 100 beziehungsweise an eine Vielzahl von Fahrzeugen einer Fahrzeugflotte verteilt werden.

Gemäß einer möglichen Ausführungsform kann durch das Auswerten des aufgenommenen Bildes B mittels der Bildauswerteeinrichtung 120 bereits im Fahrzeug die Position des Objekts 300 in Bezug auf die am Ort der Aufnahme des Bildes B ermittelte Position des Fahrzeugs 100 geschätzt werden. Eine mögliche Landmarke kann somit bereits im Fahrzeug in Bezug auf die von der Positionsbestimmungseinrichtung 130 bei der Aufnahme des Bildes ermittelte Position des Fahrzeugs vermessen werden. Mit dem Bild B kann die geschätzte Position des Objekts 300 an die Datenverarbeitungsstation 200 übertragen werden. In der Datenverarbeitungsstation kann dann mittels der Bildanalyseeinrichtung 210 die Position des Objekts 300 in Abhängigkeit von der von der Bildauswerteeinrichtung 120 geschätzten Position des Objekts genauer ermittelt werden.

Die Datenverarbeitungsstation 200 kann zur Verbesserung der Genauigkeit einer bisher ungenau positionierten Landmarke Aufträge zur erneuten Aufnahme eines Bildes und/oder zum erneuten Vermessen eines Objekts an das Fahrzeug 100 beziehungsweise weitere Fahrzeuge einer Fahrzeugflotte erteilen. Dazu kann von der Datenverarbeitungsstation 200 eine Anforderung zum Aufnehmen eines zusätzlichen Bildes der Umgebung eines Fahrzeugs und zum Übertragen des zusätzlichen Bildes zu der Datenverarbeitungsstation 200 an das Fahrzeug gesendet werden. Vom Fahrzeug wird dann mittels der Bildaufnahmeeinrichtung 110 ein zusätzliches Bild der Umgebung aufgenommen und das zusätzliche Bild zu der Datenverarbeitungsstation 200 übertragen. Durch Analysieren des zusätzlichen Bildes mittels der Bildanalyseeinrichtung 210 kann in der Datenverarbeitungsstation 200 die Genauigkeit der bisher ermittelten Position des Objekts 300 weiter verbessert werden.

Gemäß einer weiteren Ausführungsform kann das Fahrzeug 100 mittels der Positionsbestimmungseinrichtung 130 eine Position des Fahrzeugs am Ort der Aufnahme des zusätzlichen Bildes ermitteln. Durch Auswerten des zusätzlichen Bildes mittels der Bildauswerteeinrichtung 120 kann die Position des Objekts 300 in Bezug zu der am Ort der Aufnahme des zusätzlichen Bildes ermittelten Position des Fahrzeugs 100 im Fahrzeug geschätzt werden. Die nun neuerdings geschätzte Position des Objekts 300 kann von dem Fahrzeug 100 zu der Datenverarbeitungsstation 200 übertragen werden. Mittels der Bildanalyseeinrichtung 210 kann in Abhängigkeit von der geschätzten Position des Objekts 300 die Genauigkeit der bisher ermittelten Position des mindestens einen Objekts 300 weiter verbessert werden.

Zum Ermitteln einer Position, an der sich das Fahrzeug befindet, kann der in der Speichereinrichtung 160 gespeicherte Datensatz, der das als Landmarke geeignete Objekt 300 beschreibt, verwendet werden. Dazu wird von der Bildaufnahmeeinrichtung 110 eines Fahrzeugs ein Bild der Umgebung des Fahrzeugs aufgenommen. In Abhängigkeit von den in der Speichereinrichtung 160 gespeicherten Datensätzen und somit in Abhängigkeit von den im Fahrzeug bekannten Landmarken wird das Bild im Fahrzeug von der Bildauswerteeinrichtung 120 ausgewertet, um festzustellen, ob eines der im Bild erkannten Objekte mit einer der gespeicherten Landmarken übereinstimmt. Wenn vom Fahrzeug beispielsweise das Vorhandensein des Objekts 300 in dem Bild festgestellt worden ist, kann durch die Bildauswerteeinrichtung 120 eine relative Position des Fahrzeugs 100 in Bezug auf die hochgenau bekannte Position des Objekts 300 festgestellt werden. Anschließend kann von der Positionsbestimmungseinrichtung 130 eine hochgenaue Position des Fahrzeugs 100 in Abhängigkeit von der ermittelten relativen Position des Fahrzeugs in Bezug auf das Objekt 300 und in Abhängigkeit von dem Signal der Satellitennavigationsantenne 140 und/oder dem Signal des Sensors 150 zur Erfassung der Fahrdynamik des Fahrzeugs ermittelt werden.

Gemäß einer weiteren möglichen Ausführungsform kann durch die Bildauswerteeinrichtung 120 die relative Position des mindestens einen Objekts 300 in Bezug auf die ermittelte Position des Fahrzeugs 100 bestimmt werden. Von dem Fahrzeug 100 können nun Korrekturdaten an die Datenverarbeitungsstation 200 gesendet werden. Die Korrekturdaten können Daten sein, die die ermittelte relative Position des mindestens einen Objekts 300 in Bezug auf die Position des Fahrzeugs 100 angeben. Des Weiteren können als Korrekturdaten Daten, die die Position des Fahrzeugs 100 in Abhängigkeit von dem Signal der Satellitennavigationsantenne 140 und/oder dem Signal des Sensors 150 zum Erfassen der Fahrdynamik des Fahrzeugs angeben, von dem Fahrzeug 100 zu der Datenverarbeitungsstation 200 übertragen werden. Darüber hinaus können die Korrekturdaten Inkonsistenzen zwischen Positionen mehrerer erkannter Landmarken beschreiben. In Abhängigkeit von den empfangenen Korrekturdaten kann die Datenverarbeitungsstation 200 die Genauigkeit der Position des als Landmarke geeigneten Objekts 300 verbessern.

## Patentansprüche

1. Verfahren zum Ermitteln und Bereitstellen eines Datensatzes mit Merkmalen zur Beschreibung einer Landmarke zur Positionsbestimmung für ein Fahrzeug, umfassend:
- Bereitstellen eines Fahrzeugs (100) mit einer Bildaufnahmeeinrichtung (110) zur Aufnahme eines Bildes (B) einer Umgebung des Fahrzeugs (100) und einer Bildauswerteeinrichtung (120) zum Auswerten des Bildes (B) und mit einer Positionsbestimmungseinrichtung (130) zum Ermitteln einer Position des Fahrzeugs (100),
- Bereitstellen einer Datenverarbeitungsstation (200) mit einer Bildanalyseeinrichtung (210) zur Analyse des Bildes (B) zum Feststellen einer Landmarke in dem Bild (B) ,
- Aufnehmen eines Bildes (B) mit der Bildaufnahmeeinrichtung (110),
- Ermitteln einer Position des Fahrzeugs (100) am Ort des aufgenommenen Bildes (B) mittels der Positionsbestimmungseinrichtung (120),
- Auswerten des Bildes (B) mit der Bildauswerteeinrichtung (120),
- Übertragen des aufgenommenen Bildes (B) und der ermittelten Position des Fahrzeugs (100) von dem Fahrzeug (100) zu der Datenverarbeitungsstation (200), wenn die Bildauswerteeinrichtung (120) mindestens eines der in dem aufgenommenen Bild (B) enthaltenen Objekte (300) als ein statisches Objekt auswertet,
- Analysieren des empfangenen Bildes (B) durch die Bildanalyseeinrichtung (210) um festzustellen, ob das mindestens eine Objekt als Landmarke geeignet ist,
- Ermitteln einer Position des mindestens einen Objekts (300) in dem empfangenen Bild (B) durch die Bildanalyseeinrichtung (210), wenn das mindestens eine Objekt (300) als Landmarke geeignet ist,
- Erzeugen eines das mindestens eine Objekt (300) beschreibenden Datensatzes durch die Datenverarbeitungsstation (200), wenn das mindestens eine Objekt (300) als Landmarke geeignet ist, wobei der Datensatz die ermittelte Position des Objekts (300) enthält,
- Übertragen des Datensatzes an das Fahrzeug (100),
- Empfangen des Datensatzes durch das Fahrzeug (100),
- Verwendung des Datensatzes für eine verbesserte Fahrzeugpositionsbestimmung.

2. Verfahren nach Anspruch 1, umfassend:
- Extrahieren von Merkmalen des mindestens einen Objekts (300) in dem empfangenen Bild (B) mittels der Bildanalyseeinrichtung (210),
- Feststellen, ob das mindestens eine Objekt (300) als Landmarke geeignet ist, anhand der extrahierten Merkmale des mindestens einen Objekts (300) durch die Bildanalyseeinrichtung (210).

3. Verfahren nach Anspruch 2, umfassend:
Erzeugen des Datensatzes derart, dass der Datensatz die extrahierten Merkmale des mindestens einen Objekts (300) enthält.

4. Verfahren nach einem der Ansprüche 1 bis 3, umfassend:
- Bereitstellen des Fahrzeugs (100) mit einer Antenne (140) zum Empfangen von Signalen eines Satellitennavigationssystems und/oder mit mindestens einem Sensor (150) zum Erfassen einer Fahrdynamik des Fahrzeugs (100),
- Ermitteln der Position des Fahrzeugs (100) am Ort des aufgenommenen Bildes (B) durch die Positionsbestimmungseinrichtung (130) in Abhängigkeit von einem Signal der Antenne (140) und/oder einem Signal des mindestens einen Sensors (150).

5. Verfahren nach einem der Ansprüche 1 bis 4, umfassend:
- Schätzen einer Position des mindestens einen Objekts (300) in Bezug auf die am Ort der Aufnahme des Bildes (B) ermittelte Position des Fahrzeugs (100) durch das Auswerten des aufgenommenen Bildes (B) mittels der Bildauswerteeinrichtung (120) im Fahrzeug (100),
- Ermitteln der Position des mindestens einen Objekts (300) mittels der Bildanalyseeinrichtung (210) in Abhängigkeit von der von der Bildauswerteeinrichtung (120) geschätzten Position des mindestens einen Objekts (300).

6. Verfahren nach einem der Ansprüche 1 bis 5, umfassend:
- Senden einer Anforderung von der Datenverarbeitungsstation (200) an das Fahrzeug (100) zum Aufnehmen eines zusätzlichen Bildes der Umgebung des Fahrzeugs (100) und zum Übertragen des zusätzlichen Bildes zu der Datenverarbeitungsstation (200),
- Aufnehmen des zusätzlichen Bildes der Umgebung des Fahrzeugs (100) mittels der Bildaufnahmeeinrichtung (110),
- Übertragen des zusätzlichen Bildes von dem Fahrzeug (100) zu der Datenverarbeitungsstation (200),
- Verbessern der Genauigkeit der ermittelten Position des mindestens einen Objekts (300) durch Analysieren des zusätzlichen Bildes mittels der Bildanalyseeinrichtung (210).

7. Verfahren nach Anspruch 6, umfassend:
- Ermitteln einer Position des Fahrzeugs (100) am Ort der Aufnahme des zusätzlichen Bildes mittels der Positionsbestimmungseinrichtung (130),
- Schätzen der Position des mindestens einen Objekts (300) in Bezug zu der am Ort der Aufnahme des zusätzlichen Bildes ermittelten Position des Fahrzeugs (100) durch Auswerten des zusätzlichen Bildes mittels der Bildauswerteeinrichtung (120),
- Übertragen der durch Auswerten des zusätzlichen Bildes geschätzten Position des mindestens einen Objekts (300) von dem Fahrzeug (100) zu der Datenverarbeitungsstation (200),
- Verbessern der Genauigkeit der ermittelten Position des mindestens einen Objekts (300) mittels der Bildanalyseeinrichtung (210) in Abhängigkeit von der durch Auswerten des zusätzlichen Bildes von der Bildauswerteeinrichtung (120) geschätzten Position des mindestens einen Objekts (300).

8. Verfahren nach einem der Ansprüche 4 bis 7, umfassend:
- Speichern des Datensatzes in einer Speichereinrichtung (160) im Fahrzeug (100),
- Aufnehmen eines weiteren Bildes der Umgebung des Fahrzeugs (100),
- Auswerten des weiteren Bildes in Abhängigkeit von dem gespeicherten Datensatz durch die Bildauswerteeinrichtung (120) zum Feststellen des Vorhandenseins des mindestens einen Objekts (300) in dem weiteren Bild,
- Feststellen einer relativen Position des Fahrzeugs (100) in Bezug auf die in dem Datensatz angegebene Position des mindestens einen Objekts (300) durch die Bildauswerteeinrichtung (120), wenn das Vorhandensein des mindestens einen Objekts (300) in dem weiteren Bild festgestellt worden ist,
- Ermitteln einer Position des Fahrzeugs (100) durch die Positionsbestimmungseinrichtung (130) in Abhängigkeit von der von der Bildauswerteeinrichtung (120) ermittelten relativen Position des Fahrzeugs (100) und dem Signal der Antenne (140) und/oder dem Signal des mindestens einen Sensors (150).

9. Verfahren nach Anspruch 8, umfassend:
Ermitteln der relativen Position des mindestens einen Objekts (300) in Bezug auf die ermittelte Position des Fahrzeugs (100) durch die Bildauswerteeinrichtung (120).

10. Verfahren nach Anspruch 9, umfassend:
- Übertragen von ersten Daten, die die Position des Fahrzeugs (100) in Abhängigkeit von dem Signal der Antenne (140) und/oder dem Signal des mindestens einen Sensors (150) angeben, von dem Fahrzeug (100) zu der Datenverarbeitungsstation (200),
- Übertragen von zweiten Daten, die die ermittelte relative Position des mindestens einen Objekts (300) in Bezug auf die Position des Fahrzeugs (100) angeben, von dem Fahrzeug zu der Datenverarbeitungsstation (200),
- Verbessern der Genauigkeit der ermittelten Position des mindestens einen Objekts (300) mittels der Bildanalyseeinrichtung (210) in Abhängigkeit von den empfangenen ersten und zweiten Daten.

## Claims

1. Method for ascertaining and providing a data record having features for describing a landmark for position finding for a vehicle, comprising:
- provision of a vehicle (100) having an image recording device (110) for recording an image (B) of surroundings of the vehicle (100) and an image evaluation device (120) for evaluating the image (B) and having a position finding device (130) for ascertaining a position of the vehicle (100),
- provision of a data processing station (200) having an image analysis device (210) for analyzing the image (B) to stipulate a landmark in the image (B),
- recording of an image (B) using the image recording device (110),
- ascertainment of a position of the vehicle (100) at the location of the recorded image (B) by means of the position finding device (130),
- evaluation of the image (B) using the image evaluation device (120),
- transmission of the recorded image (B) and the ascertained position of the vehicle (100) from the vehicle (100) to the data processing station (200) when the image evaluation device (120) evaluates at least one of the objects (300) that the recorded image (B) contains as a static object,
- analysis of the received image (B) by the image analysis device (210) in order to establish whether the at least one object is suitable as a landmark,
- ascertainment of a position of the at least one object (300) in the received image (B) by the image analysis device (210) when the at least one object (300) is suitable as a landmark,
- production of a data record describing the at least one object (300) by the data processing station (200) when the at least one object (300) is suitable as a landmark, wherein the data record contains the ascertained position of the object (300),
- transmission of the data record to the vehicle (100),
- receipt of the data record by the vehicle (100),
- use of the data record for an improved vehicle position determination.

2. Method according to Claim 1, comprising:
- extraction of features of the at least one object (300) in the received image (B) by means of the image analysis device (210),
- establishment of whether the at least one object (300) is suitable as a landmark on the basis of the extracted features of the at least one object (300) by the image analysis device (210).

3. Method according to Claim 2, comprising:
production of the data record such that the data record contains the extracted features of the at least one object (300) .

4. Method according to one of Claims 1 to 3, comprising:
- provision of the vehicle (100) having an antenna (140) for receiving signals from a satellite navigation system and/or having at least one sensor (150) for capturing driving dynamics of the vehicle (100),
- ascertainment of the position of the vehicle (100) at the location of the recorded image (B) by the position finding device (130), on the basis of a signal from the antenna (140) and/or a signal from the at least one sensor (150).

5. Method according to one of Claims 1 to 4, comprising:
- estimation of a position of the at least one object (300) in relation to the position of the vehicle (100), as ascertained at the location of the recording of the image (B), by virtue of the evaluation of the recorded image (B) by means of the image evaluation device (120) in the vehicle (100),
- ascertainment of the position of the at least one object (300) by means of the image analysis device (210) on the basis of the position of the at least one object (300), as estimated by the image evaluation device (120).

6. Method according to one of Claims 1 to 5, comprising:
- sending of a request from the data processing station (200) to the vehicle (100) to record an additional image of the surroundings of the vehicle (100) and to transmit the additional image to the data processing station (200),
- recording of the additional image of the surroundings of the vehicle (100) by means of the image recording device (110),
- transmission of the additional image from the vehicle (100) to the data processing station (200),
- improvement of the accuracy of the ascertained position of the at least one object (300) by virtue of analysis of the additional image by means of the image analysis device (210).

7. Method according to Claim 6, comprising:
- ascertainment of a position of the vehicle (100) at the location of the recording of the additional image by means of the position finding device (130),
- estimation of the position of the at least one object (300) in relation to the position of the vehicle (100), as ascertained at the location of the recording of the additional image, by virtue of evaluation of the additional image by means of the image evaluation device (120),
- transmission of the position of the at least one object (300), as estimated by virtue of evaluation of the additional image, from the vehicle (100) to the data processing station (200),
- improvement of the accuracy of the ascertained position of the at least one object (300) by means of the image analysis device (210) on the basis of the position of the at least one object (300) as estimated by virtue of evaluation of the additional image by the image evaluation device (120).

8. Method according to one of Claims 4 to 7, comprising:
- storage of the data record in a memory device (160) in the vehicle (100),
- recording of a further image of the surroundings of the vehicle (100),
- evaluation of the further image on the basis of the stored data record by the image evaluation device (120) to establish the presence of the at least one object (300) in the further image,
- establishment of a relative position of the vehicle (100) in relation to the position of the at least one object (300), as indicated in the data record, by the image evaluation device (120) when the presence of the at least one object (300) in the further image has been established,
- ascertainment of a position of the vehicle (100) by the position finding device (130) on the basis of the relative position of the vehicle (100), as ascertained by the image evaluation device (120), and the signal from the antenna (140) and/or the signal from the at least one sensor (150).

9. Method according to Claim 8, comprising:
ascertainment of the relative position of the at least one object (300) in relation to the ascertained position of the vehicle (100) by the image evaluation device (120).

10. Method according to Claim 9, comprising:
- transmission of first data, which indicate the position of the vehicle (100) on the basis of the signal from the antenna (140) and/or the signal from the at least one sensor (150), from the vehicle (100) to the data processing station (200),
- transmission of second data, which indicate the ascertained relative position of the at least one object (300) in relation to the position of the vehicle (100), from the vehicle to the data processing station (200),
- improvement of the accuracy of the ascertained position of the at least one object (300) by means of the image analysis device (210) on the basis of the received first and second data.

## Revendications

1. Procédé pour la détermination et la fourniture d'un jeu de données comportant des caractéristiques permettant de décrire un point de repère destiné à déterminer la positon d'un véhicule, consistant à :
- doter un véhicule (100) d'un dispositif d'acquisition d'image (110) destiné à acquérir une image (B) d'un environnement du véhicule (100), d'un dispositif d'évaluation d'image (120) destiné à évaluer l'image (B) et d'un dispositif de détermination de position (130) destiné à déterminer une position du véhicule (100),
- doter une station de traitement de données (200) d'un dispositif d'analyse d'image (210) destiné à analyser l'image (B) pour établir un point de repère dans l'image (B),
- acquérir une image (B) au moyen du dispositif d'acquisition d'image (110),
- déterminer au moyen du dispositif de détermination de position (120) une position du véhicule (100) à l'emplacement de l'image (B) acquise,
- évaluer l'image (B) au moyen du dispositif d'évaluation d'image (120),
- transmettre l'image (B) acquise et la position déterminée du véhicule (100) du véhicule (100) à la station de traitement de données (200) lorsque le dispositif d'évaluation d'image (120) évalue comme étant un objet statique au moins l'un des objets (300) contenus dans l'image (B) acquise,
- analyser l'image (B) reçue au moyen du dispositif d'analyse d'image (210) afin de déterminer si ledit au moins un objet est approprié en tant que point de repère,
- déterminer au moyen du dispositif d'analyse d'image (210) une position dudit au moins un objet (300) dans l'image (B) reçue lorsque ledit au moins un objet (300) est approprié en tant que point de repère,
- générer au moyen de la station de traitement de données (200) un jeu de données décrivant ledit au moins un objet (300) lorsque ledit au moins un objet (300) est approprié en tant que point de repère, dans lequel le jeu de données contient la position déterminée de l'objet (300),
- transmettre le jeu de données au véhicule (100),
- recevoir le jeu de données par le véhicule (100),
- utiliser le jeu de données pour améliorer la détermination de position du véhicule.

2. Procédé selon la revendication 1, consistant à :
- extraire au moyen du dispositif d'analyse d'image (210) des caractéristiques dudit au moins un objet (300) dans l'image (B) reçue,
- déterminer si ledit un objet (300) est approprié en tant que point de repère sur la base des caractéristiques dudit au moins un objet (300), extraites par le dispositif d'analyse d'image (210) .

3. Procédé selon la revendication 2, consistant à :
générer le jeu de données de manière à ce que le jeu de données contienne les caractéristiques extraites dudit au moins un objet (300).

4. Procédé selon l'une des revendications 1 à 3, consistant à :
- doter le véhicule (100) d'une antenne (140) destinée à recevoir des signaux d'un système de navigation par satellite et/ou d'un capteur (150) destiné à détecter une dynamique de conduite du véhicule (100),
- déterminer au moyen du dispositif de détermination de position (130) la position du véhicule (100) à l'emplacement de l'image (B) acquise en fonction d'un signal de l'antenne (140) et/ou d'un signal dudit au moins un capteur (150).

5. Procédé selon l'une des revendications 1 à 4, consistant à :
- estimer une position dudit au moins un objet (300) par rapport à la position déterminée du véhicule (100) à l'emplacement de l'acquisition de l'image (B) par évaluation de l'image (B) acquise au moyen du dispositif d'évaluation d'image (120) dans le véhicule (100),
- déterminer au moyen du dispositif d'analyse d'image (210) la positon dudit au moins un objet (300) en fonction de la position estimée par le dispositif d'évaluation d'image (120) dudit au moins un objet (300).

6. Procédé selon l'une des revendications 1 à 5, consistant à :
- envoyer une demande de la station de traitement de données (200) au véhicule (100) pour acquérir une image supplémentaire de l'environnement du véhicule (100) et pour transmettre l'image supplémentaire à la station de traitement de données (200),
- acquérir au moyen du dispositif d'acquisition d'image (110) l'image supplémentaire de l'environnement du véhicule (100),
- transmettre l'image supplémentaire du véhicule (100) à la station de traitement de données (200),
- améliorer la précision de la position déterminée dudit au moins un objet (300) par analyse de l'image supplémentaire au moyen du dispositif d'analyse d'image (210).

7. Procédé selon la revendication 6, consistant à :
- déterminer au moyen du dispositif de détermination de position (130) une position du véhicule (100) à l'emplacement de l'acquisition de l'image supplémentaire,
- estimer la position dudit au moins un objet (300) par rapport à la position déterminée du véhicule (100) à l'emplacement de l'acquisition de l'image supplémentaire par évaluation de l'image supplémentaire au moyen du dispositif d'évaluation d'image (120),
- transmettre la position estimée par évaluation de l'image supplémentaire dudit au moins un objet (300) du véhicule (100) à la station de traitement de données (200),
- améliorer au moyen du dispositif d'analyse d'image (210) la précision de la position déterminée dudit au moins un objet (300) en fonction de la position dudit au moins un objet (300), estimée par analyse de l'image supplémentaire par le dispositif d'évaluation d'image (120).

8. Procédé selon l'une des revendications 4 à 7, consistant à :
- stocker le jeu de données dans un dispositif de stockage (160) du véhicule (100),
- acquérir une autre image de l'environnement du véhicule (100),
- évaluer au moyen du dispositif d'évaluation d'image (120) l'autre image en fonction du jeu de données stocké pour déterminer la présence dudit au moins un objet (300) dans l'autre image,
- établir, au moyen du dispositif d'évaluation d'image (120), une position relative du véhicule (100) par rapport à la position dudit au moins un objet (300) indiquée dans le jeu de données lorsque la présence dudit au moins un objet (300) a été établie dans l'autre image,
- déterminer au moyen du dispositif de détermination de position (130) une position du véhicule (100) en fonction de la position relative du véhicule (100) déterminée par le dispositif d'évaluation d'image (120) et du signal de l'antenne (140) et/ou du signal dudit au moins un capteur (150).

9. Procédé selon la revendication 8, consistant à :
déterminer, au moyen du dispositif d'analyse d'image (120), la position relative dudit au moins un objet (300) par rapport à la position du véhicule (100).

10. Procédé selon la revendication 9, consistant à :
- transmettre des premières données qui indiquent la position du véhicule (100) en fonction du signal de l'antenne (140) et/ou du signal dudit au moins un capteur (150), du véhicule (100) à la station de traitement de données (200),
- transmettre des secondes données qui indiquent la position relative déterminée dudit au moins un objet (300) par rapport à la position du véhicule (100), du véhicule à la station de traitement de données (200),
- améliorer au moyen du dispositif d'analyse d'image (210) la précision de la position déterminée dudit au moins un objet (300) en fonction des premières et secondes données reçues.
